# EUROPÄISCHE PATENTSCHRIFT

(11) **EP 2 489 897 B1**
(45) Veröffentlichungstag und Bekanntmachung des Hinweises auf die Patenterteilung: **04.09.2013**
(21) Anmeldenummer: 12155686.4
(22) Anmeldetag: 16.02.2012
(51) Int. Cl.: F16D 65/18, F16D 65/00

(54) **Scheibenbremse**
Disc brake
Frein à disque

(30) Priorität: 17.02.2011 DE 102011011394
(43) Veröffentlichungstag der Anmeldung: 22.08.2012
(73) Patentinhaber: KNORR-BREMSE Systeme für Nutzfahrzeuge GmbH, 80809 München (DE)
(72) Erfinder: Asen, Alexander, 94474 Vilshofen (DE)
(74) Vertreter: Mattusch, Gundula

(56) Entgegenhaltungen:
- WO-A1-2004/102024
- WO-A2-2009/074222
- US-A1- 2011 233 013

## Beschreibung

Die Erfindung betrifft eine Scheibenbremse nach dem Oberbegriff des Anspruchs 1, wie z.B. aus WO-A-2009/074222 bekannt.

Um in einem Aufnahmeraum des Bremssattels angeordnete funktionsrelevante Bauteile vor Korrosion durch Witterungseinflüsse zu schützen, ist eine Öffnung des Aufnahmeraums auf der bei einer Schiebesattelbremse dem zuspannseitigen Bremsbelag zugeordneten Seite des Bremssattels durch einen Verschlussdeckel weitgehend verschlossen.

Dabei weist der Verschlussdeckel Öffnungen auf, durch die Stellspindeln geführt sind, die bei einer Bremsung mittels der Zuspanneinrichtung gegen den Bremsbelag gedrückt werden.

Zur Abdichtung des Durchtrittsbereichs jeder Stellspindel ist ein Faltenbalg vorgesehen, der einerseits an der Stellspindel dichtend anliegt und andererseits am Verschlussdeckel befestigt ist, wobei der Faltenbalg mit einem Endbereich ausschließlich reibschlüssig an der Innenseite eines die Durchtrittsöffnung randseitig begrenzenden achsparallel zur Stellspindel ausgerichteten Kragen anliegt.

Als redundantes Dichtungselement ist des Weiteren eine sogenannte Sekundärdichtung vorgesehen, die in Richtung des Aufnahmeraumes dem Faltenbalg nachgeordnet ist und durch die bei einem möglichen Versagen des Faltenbalgs der Aufnahmeraum vor grobem Schmutz geschützt wird.

Diese konzentrisch zum Faltenbalg angeordnete Sekundärdichtung liegt dichtend an der Stellspindel an und ist formschlüssig am Kragen des Verschlussdeckels gehalten. Hierzu sind bei den bekannten Konstruktionen entsprechende Ausformungen des Kragens vorgesehen, in die daran angepasste Haltemittel der Sekundärdichtung eingreifen.

Allerdings sind die vielfach sickenförmig gestalteten Ausformungen des Kragens nur mit erheblichem fertigungstechnischen Aufwand herstellbar, da sie üblicherweise bei dem aus Blech bestehenden Verschlussdeckel durch Stanzen eingebracht werden. Diese relativ komplizierte Sickenkontur steht einer einfachen und kostengünstigen Herstellung entgegen, wozu auch die Bereitstellung entsprechend aufwändiger Werkzeuge zu rechnen ist.

Der gebildete Formschluss zwischen dem Kragen und der Sekundärdichtung dient zur Fixierung in radialer Richtung, wohingegen eine axiale Sicherung durch den Faltenbalg gegeben ist, der im Anlagebereich mit dem Kragen einen Verstärkungsring aus Metall aufweist, an dem dann die Sekundärdichtung anliegt.

Vor allem bei einem Defekt des Faltenbalges, der unter Umständen zu dessen Lösen aus der Befestigung mit dem Verschlussdeckel führt, ist die axiale Sicherung der Sekundärdichtung nicht gewährleistet, so dass diese ihre vorbestimmte Aufgabe, nämlich eine Abdichtung des Aufnahmeraums im Falle des Dichtversagens des Faltenbalges zu gewährleisten, nicht erfüllen kann.

Die funktionsbedingte axiale Walkbewegung des Faltenbalges führt zu einer Belastung des Reibschlusses zwischen dem Faltenbalg und dem Kragen mit der Gefahr, dass die Dichtwirkung im Verbindungsbereich im Dauerbetrieb gefährdet ist, d.h., der Faltenbalg kann sich in axialer Richtung aus seiner dichtenden Anlage mit dem Kragen herausbewegen, so dass die gewünschte Funktionssicherheit des Faltenbalges nicht gewährleistet ist.

Der Erfindung liegt die Aufgabe zugrunde, eine Scheibenbremse der gattungsgemäßen Art so weiterzuentwickeln, dass die Sekundärdichtung einfacher und damit kostengünstiger herstellbar ist und ihre Funktionssicherheit ebenso wie die des Faltenbalges verbessert wird.

Diese Aufgabe wird durch eine Scheibenbremse mit den Merkmalen des Anspruchs 1 gelöst.

Durch das erfindungsgemäße Anspritzen der als Kunststoffteil ausgebildeten Sekundärdichtung an den Kragen des metallischen Verschlussdeckels, kann auf das Einbringen von Sicken in den Kragen verzichtet werden. Hieraus ergibt sich eine beachtenswerte Kostenreduzierung bei der Herstellung, die insofern bedeutsam ist, als Scheibenbremsen in großen Stückzahlen hergestellt und verwandt werden.

Bislang wurde die Sekundärdichtung als separates Teil hergestellt und anschließend montiert, wohingegen durch die Erfindung auf den Arbeitsschritt der Montage verzichtet werden kann, was sich gleichfalls kostenmindernd auswirkt.

Das auch unter dem Begriff "Outsert-Technik" bekannte Anspritzen von Kunststoff an Metall, hier das Anspritzen der Sekundärdichtung an den Kragen, kann mit geringem fertigungstechnischen Aufwand erfolgen.

Dabei ist die Sekundärdichtung bevorzugt aus einem formstabilen, d.h., steifen Kunststoff hergestellt, wodurch auf den Einsatz eines Stützringes im Anlagebereich an der Stellspindel verzichtet werden kann, wie dies bisher erforderlich war, da die Sekundärdichtung vornehmlich aus einem Elastomer bestand.

Zur Erzielung einer ausreichenden Dichtung zwischen der Stellspindel und der topfartig gestalteten formsteifen Sekundärdichtung, ist in deren Anlagebereich mit der Stellspindel eine elastische Dichtlippe vorgesehen, die zweckmäßigerweise umlaufend an die Sekundärdichtung anvulkanisiert ist, wozu die Sekundärdichtung einen konzentrischen Stützrand aufweist, der die Dichtlippe trägt.

Gemäß der Erfindung ist der Faltenbalg formschlüssig an der Sekundärdichtung gehalten, d.h., die Anlage des Faltenbalgs am Kragen dient lediglich der Abdichtung, nicht jedoch dem Halten, was eine Minimierung der Höhe des Kragens erlaubt.

Hieraus ergibt sich eine Materialersparnis, ebenso wie aus einem nun möglichen Verzicht auf eine radial nach innen gerichtete Abwinkelung des Kragens, an der bislang die Sekundärdichtung im Sinne einer Aufhängung gehalten war.

Zur Herstellung des Formschlusses zwischen dem Faltenbalg und der Sekundärdichtung weist diese innenseitig eine Hinterschneidung auf, die von Rastelementen des Faltenbalges hintergriffen wird.

Diese Rastelemente bestehen bevorzugt aus mehreren, über den Umfang verteilte Rasthaken, die im Anlagebereich des Faltenbalges mit dem Kragen gehalten sind, wobei sie beispielsweise einstückig mit einem Stützring verbunden sind, der in den Faltenbalg eingebettet ist und aus Metall besteht.

Durch entsprechende Dimensionierung des lichten Durchmessers der Sekundärdichtung im Bereich der Hinterschneidung und Anpassung des radialen

Abmaßes der Rasthaken kann gewährleistet werden, dass beim Einsetzen des Faltenbalges in die Sekundärdichtung, bei der der Faltenbalg durch die Öffnung des Verschlussdeckels geschoben wird, die Rasthaken die Anlage- und damit Dichtfläche des Kragens nicht beschädigen.

Da, wie erwähnt, mehrere umfänglich verteilte Rasthaken vorgesehen sind, sind diese beim Einsetzen in die Sekundärdichtung so weit radial auslenkbar, dass die innewohnenden Rückstellkräfte ausreichen, um die Rasthaken in ihrer Endstellung in Verrastungsposition bringen.

Im Übrigen kann ein gemäß der Erfindung modifizierter Verschlussdeckel einschließlich der Faltenbälge und Sekundärdichtungen nachträglich in eine Scheibenbremse eingesetzt werden, beispielsweise bei Wartungs- und/oder Reparaturarbeiten, so dass die sich hinsichtlich der Funktionsverbesserung ergebenden Vorteile auch bei bereits in Betrieb befindlichen Scheibenbremsen wirksam werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht
- Figur 2: einen Ausschnitt der Scheibenbremse nach Figur 1 in einer vergrößerten Darstellung
- Figur 3: eine Einzelheit der Scheibenbremse in einer vergrößerten geschnittenen Seitenansicht
- Figur 4: eine weitere Einzelheit der Scheibenbremse in einer perspektivischen Ansicht.

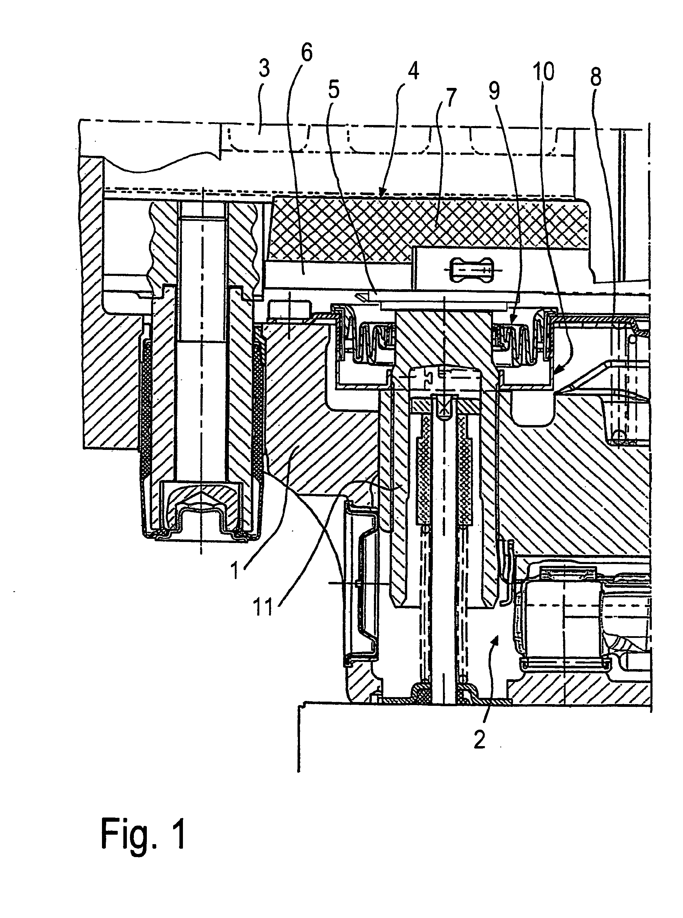

In der Figur 1 ist eine Hälfte einer pneumatisch oder elektromotorisch betätigbaren Scheibenbremse dargestellt, die einen als Schiebesattel ausgebildeten Bremssattel 1 aufweist, der eine Bremsscheibe 3 in ihrem oberen Umfangsbereich umfasst.

Zu beiden Seiten der Bremsscheibe 3 sind Bremsbeläge 4 angeordnet, von denen hier ein aktionsseitiger dargestellt ist, die in Funktion, also bei einer Bremsung, gegen die Bremsscheibe 3 pressbar sind.

Der Bremsbelag 4 besteht aus einer Trägerplatte 6 und einem auf dessen der Bremsscheibe 3 zugewandten Seite befestigten Reibbelag 7.

Über eine in einem Aufnahmeraum des Bremssattels angeordnete, mittels eines Drehehebels betätigbare Zuspanneinrichtung 2 wird eine Stellspindel 11 über ein angeschlossenes Druckstück 5 gegen den Bremsbelag 4 gedrückt. Anstelle der stirnseitigen Anbindung des Druckstücks 5 an der Stellspindel 11 kann das Druckstück 5 auch fest mit der Trägerplatte 6 verbunden sein.

Zur Einstellung eines verschleißbedingten Lüftspiels zwischen dem Reibbelag 7 und der Bremsscheibe 3 ist die als Gewindespindel ausgebildete Stellspindel 11 drehbar am Bremssattel gelagert und über eine nicht dargestellte Nachstelleinrichtung bewegbar.

Der Bremssattel 1 ist auf seiner der Bremsscheibe 3 zugewandten Seite weitgehend durch einen Verschlussdeckel 8 verschlossen, der im Austrittsbereich der Stellspindel 11 eine durch einen zum Aufnahmeraum hin axial ausgerichteten Kragen 12 begrenzte Öffnung aufweist.

Zur Abdichtung der Öffnung ist ein am Kragen 12 anliegender Faltenbalg 9 vorgesehen, der mit seinem anderen, als Dichtfläche 18 ausgebildeten Ende an der Stellspindel 11 anliegt.

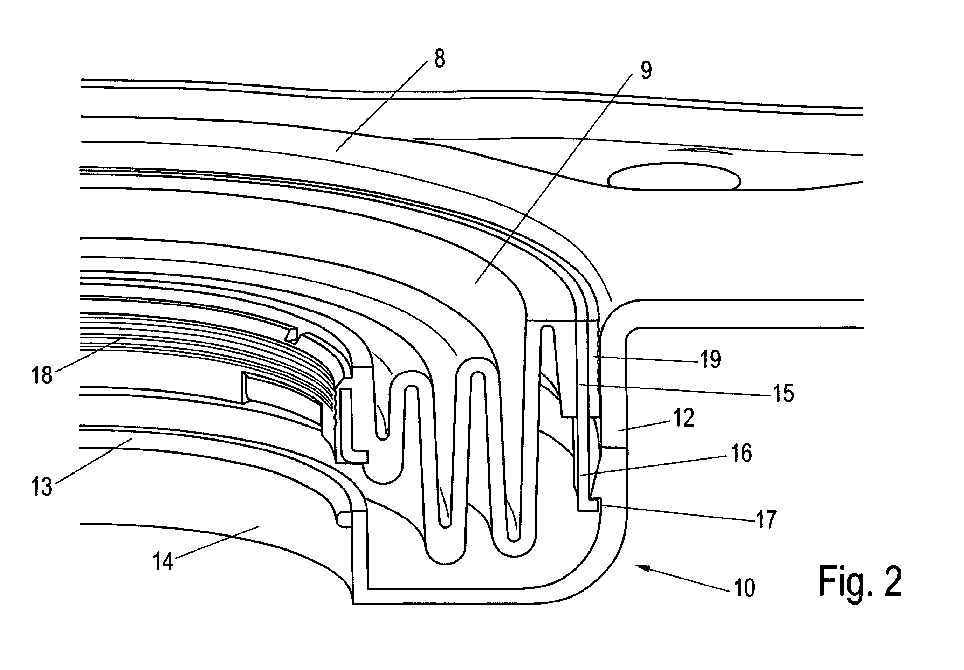

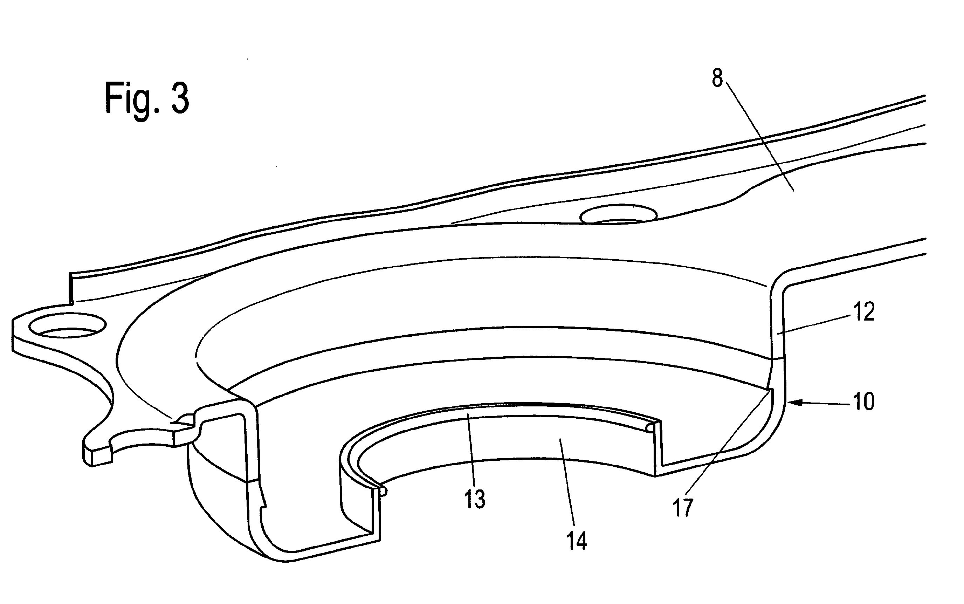

In Richtung des Aufnahmeraumes, dem Faltenbalg 9 nachgeordnet und zu diesem konzentrisch verlaufend, ist eine topfförmige Sekundärdichtung 10 vorgesehen, die erfindungsgemäß als Kunststoffteil an den Kragen 12 des metallischen Verschlussdeckels 8 angespritzt ist, wobei diese Art der Fertigung unter dem Begriff "Outsert-Technik" bekannt ist. Wie insbesondere in den Figuren 2 und 3 erkennbar ist, erstreckt sich die umfängliche Wandung der Sekundärdichtung 10 axial gleichgerichtet und in einer Rotationsebene mit dem Kragen 12.

An einen axial sich erstreckenden konzentrischen Stützrand 14 der Sekundärdichtung 10 ist eine Dichtlippe 13 aus einem elastischen Material befestigt, vorzugsweise durch Anvulkanisieren, die in Funktion dichtend an der Stellspindel 11 anliegt. Eine Dichtung wird auch durch eine Dichtfläche 18 des Faltenbalges 9 hergestellt, die sich an der Stellspindel abstützt.

Während die Figur 3 die fertigungstechnisch als eine Baueinheit anzusehende Kombination Verschlussplatte 8/Sekundärdichtung 10 als Einzelheit wiedergibt, ist in der Figur 2 das durch den eingesetzten Faltenbalg 9 komplettierte Dichtungssystem dargestellt.

Darin ist deutlich zu erkennen, dass, gemäß der Erfindung, der Faltenbalg 9 formschlüssig an der Sekundärdichtung 10 befestigt ist.

Als Formschlussmittel weist die Sekundärdichtung 10 innenseitig eine umlaufende Hinterschneidung 17 auf, an der Rasthaken 16, die im Faltenbalg 9 befestigt sind, angreifen.

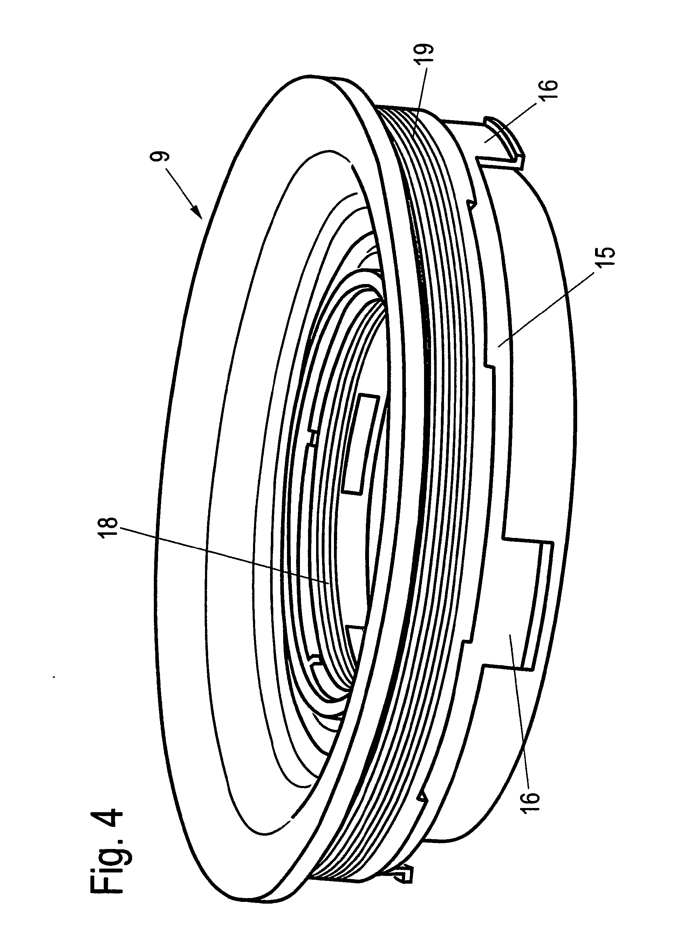

In der Figur 4 ist ein solcherart ausgebildeter Faltenbalg 9 erkennbar. Es ist zu sehen, dass die Rasthaken 16, von denen mehrere vorzugsweise gleichmäßig über den Umfang verteilt vorgesehen sind, einstückig mit einem Stützring 15, bevorzugt aus Metall ausgebildet sind, der in den Faltenbalg 9 eingebettet ist.

Aus der Figur 2 ergibt sich, dass die Höhe des Kragens 12 im Wesentlichen abhängig ist von der Breite der einen Dichtrand 19 bildenden Anlagefläche des Faltenbalges 9.

### Bezugszeichenliste

- 1: Bremssattel
- 2: Zuspanneinrichtung
- 3: Bremsscheibe
- 4: Bremsbelag
- 5: Druckstück
- 6: Trägerplatte
- 7: Reibbelag
- 8: Verschlussdeckel
- 9: Faltenbalg
- 10: Sekundärdichtung
- 11: Stellspindel
- 12: Kragen
- 13: Dichtlippe
- 14: Stützrand
- 15: Stützring
- 16: Rasthaken
- 17: Hinterschneidung
- 18: Dichtfläche
- 19: Dichtrand

## Patentansprüche

1. Scheibenbremse, mit einem Bremssattel (1), in dem zwei in Funktion gegen eine Bremsscheibe (3) pressbare Bremsbeläge (4) angeordnet sind, von denen ein aktionsseitiger über mindestens eine Stellspindel (11) mittels einer Zuspanneinrichtung (2) betätigbar ist, und die Stellspindel (11) durch eine durch einen abgewinkelten Kragen (12) begrenzte Öffnung eines Verschlussdeckels (8) geführt ist, der einen Aufnahmeraum des Bremssattels (1) verschließt, wobei zur Abdichtung des Aufnahmeraums ein Faltenbalg (9) an der Stellspindel (11) und andererseits mit einem Dichtrand (19) am Kragen (12) anliegt, an dem des Weiteren eine konzentrisch zum Faltenbalg (9) angeordnete, an der Stellspindel (11) anliegende Sekundärdichtung (10) gehalten ist, **dadurch gekennzeichnet, dass** der Faltenbalg (9) formschlüssig mit der topfartig gestalteten, als Kunststoffteil an den Kragen (12) des metallischen Verschlussdeckels (8) angespritzten Sekundärdichtung (10) verbunden ist.

2. Scheibenbremse nach Anspruch 1, **dadurch gekennzeichnet, dass** die Sekundärdichtung (10) im Wesentlichen aus einem formstabilen Kunststoff besteht.

3. Scheibenbremse nach Anspruch 1 oder 2, **dadurch gekennzeichnet, dass** die Sekundärdichtung (10) eine an der Stellspindel (11) dicht anliegende Dichtlippe (13) aufweist, die vorzugsweise an einem axial ausgerichteten Stützrand (14), insbesondere durch Anvulkanisieren, befestigt ist.

4. Scheibenbremse nach einem der vorhergehenden Ansprüche, **dadurch gekennzeichnet, dass** sich eine konzentrische Wandung der Sekundärdichtung (10) gleichgerichtet an den Kragen (12) anschließt.

5. Scheibenbremse nach Anspruch 4, **dadurch gekennzeichnet, dass** die zum Kragen (12) gleichgerichtete Wandung der Sekundärdichtung (10) in gleicher Rotationsebene wie der Kragen (12) verläuft.

6. Scheibenbremse nach einem der vorhergehenden Ansprüche, **dadurch gekennzeichnet, dass** die Sekundärdichtung (10) innenseitig eine Hinterschneidung (17) aufweist, in die Rasthaken (16) des Faltenbalges (9) eingreifen.

7. Scheibenbremse nach einem der vorhergehenden Ansprüche, **dadurch gekennzeichnet, dass** der Faltenbalg (9) mehrere, vorzugsweise in gleichem Abstand umfänglich angeordnete Rasthaken (16) aufweist.

8. Scheibenbremse nach einem der Ansprüche 6 oder 7, **dadurch gekennzeichnet, dass** die Rasthaken (16) einstückig mit einem im Faltenbalg (9) eingebetteten Stützring (15) verbunden sind, der vorzugsweise aus Metall besteht.

9. Scheibenbremse nach einem der Ansprüche 6 bis 8, **dadurch gekennzeichnet, dass** der bezogen auf die Mittelachse des Faltenbalges (9) äußerste Radius der Rasthaken (16) kleiner ist als der lichte Durchmesser der Öffnung im Bereich des Kragens (12).

## Claims

1. Disk brake comprising a brake calliper (1) in which two brake linings (4) are disposed that are adapted to be pressed against a brake disk in the functional condition, whereof one lining on the action side is operable via at least one adjusting spindle (11) by means of an application means (2), and said adjusting spindle (11) is passed through an opening of a closing lid (8), which is limited by an angled collar (12), which lid closes a space for accommodation of said brake calliper (1), wherein a bellows element (9) for sealing said accommodation space bears against said adjusting spindle (11) and, on the other hand, by a sealing edge (19) against said collar (12), on which moreover a secondary seal (10) is held in concentric arrangement relative to said bellows (9), which seal bears against said adjusting spindle (11), **characterized in that** said bellows are positively connected to said secondary seal (10) having a pot-like design and injection-moulded as plastic part to said collar (12) of said metal closing lid (8).

2. Disk brake according to Claim 1, **characterized in that** said secondary seal (10) consists essentially of a dimensionally stable synthetic material.

3. Disk brake according to Claim 1 or 2, **characterized in that** said secondary seal (10) comprises a sealing lip (13) tightly bearing against said adjusting spindle (11), which is preferably fastened on an axially oriented supporting edge, in particular by vulcanisation.

4. Disk brake according to any of the preceding Claims, **characterized in that** a concentric wall of said secondary seal (10) joins said collar (12) in the same orientation.

5. Disk brake according to Claim 4, **characterized in that** said wall of said secondary seal (10), which presents the same orientation as said collar (12), extends in the same rotational plane as said collar (12).

6. Disk brake according to any of the preceding Claims, **characterized in that** said secondary seal (10) presents an indentation (17) on the inside, into which locking hooks (16) of said bellows (9) are engaged.

7. Disk brake according to any of the preceding Claims, **characterized in that** said bellows (9) comprise a plurality of locking hooks (16) disposed preferably at equal distances along the periphery.

8. Disk brake according to any of the Claims 6 or 7, **characterized in that** said locking hooks (16) are integrally connected to a supporting ring (15) embedded into said bellows (9), which ring is preferably made of metal.

9. Disk brake according to any of the Claims 6 to 8, **characterized in that** the radius of said locking hooks, which is outermost relative to the centre axis of said bellows (9), is smaller than the inside diameter of the opening in the region of said collar (12).

## Revendications

1. Frein à disque comprenant un étrier de frein (1) dans lequel deux garnitures de frein (4) sont disposées, qui sont aptes à être pressé contre un disque de frein en état fonctionnel, dont une garniture du côté d'actionnement est opérable via au moins une tige de réglage (11) moyennant un moyen de serrage (2), et ladite tige de réglage (11) est passée à travers un couvercle de fermeture (8), qui est limité par un collet à angle (12), ce couvercle fermant un espace pour de réception dudit étrier de frein (1), dans lequel un soufflet (9) pour assurer l'étanchéité dudit espace de réception porte contre ladite tige de réglage (11) et, d'autre côté, par une arête d'étanchéité (19) contre ledit collet (12), sur lequel est retenu, au plus, un joint secondaire (10) en arrangement concentrique relatif audit soufflet (9), ce joint portant contre ladite tige de réglage (11), **caractérisé en ce que** ledit soufflet est relié, de façon positive, audit joint secondaire (10) ayant une configuration en pot et étant moulé par injection en tant que partie en matière synthétique audit collet (12) dudit couvercle de fermeture métallique (8).

2. Frein à disque selon la revendication 1, **caractérisé en ce que** ledit joint secondaire (10) consiste essentiellement en un matériau synthétique à stabilité dimensionnelle.

3. Frein à disque selon la revendication 1 ou 2, **caractérisé en ce que** ledit joint secondaire (10) comprend une lèvre d'étanchéité (13) étroitement portant contre ladite tige de réglage (11), qui est fixée, de préférence, à une arête d'appui a orientation axiale, en particulier par vulcanisation.

4. Frein à disque selon une quelconque des revendications précédentes, **caractérisé en ce qu'**une paroi concentrique dudit joint secondaire (10) se joigne audit collet (12) à la même orientation.

5. Frein à disque selon la revendication 4, **caractérisé en ce que** ladite paroi dudit joint secondaire (10), qui présente la même orientation que ledit collet (12), s'étend dans le même plan de rotation que ledit collet (12).

6. Frein à disque selon une quelconque des revendications précédentes, **caractérisé en ce que** ledit joint secondaire (10) présente un dégagement (17) du côté intérieur, dans lequel se trouvent en prise des crochets de blocage (16) dudit soufflet (9).

7. Frein à disque selon une quelconque des revendications précédentes, **caractérisé en ce que** ledit soufflet (9) comprend une pluralité des crochets de blocage (16) disposés, de préférence, aux écarts égaux le long de la périphérie.

8. Frein à disque selon une quelconque des revendications 6 ou 7, **caractérisé en ce que** lesdits crochets de blocage (16) sont reliés, de façon intégrale, à une bague d'appui (15) noyée dans ledit soufflet (9), cette bague étant fait, de préférence, en métal.

9. Frein à disque selon une quelconque des revendications 6 à 8, **caractérisé en ce que** le rayon desdits crochets de blocage, qui est le plus extérieur relativement a l'axe central dudit soufflet (9), est plus petit que le diamètre intérieur de l'ouverture dans la région dudit collet (12).
